# EUROPÄISCHE PATENTANMELDUNG

(11) **EP 4 043 965 A1**
(43) Veröffentlichungstag der Anmeldung: **17.08.2022**
(21) Anmeldenummer: 21156581.7
(22) Anmeldetag: 11.02.2021
(51) Int. Cl.: G04G 9/04, G04G 21/02, G06F 1/16

(54) **VORRICHTUNG ZUR ANZEIGE VON INFORMATIONEN**

(71) Anmelder: Adam, Bernd, 69469 Weinheim (DE)
(72) Erfinder: Adam, Bernd, 69469 Weinheim (DE)
(74) Vertreter: Ullrich & Naumann PartG mbB

(57) **Zusammenfassung**

Eine Vorrichtung zur Anzeige von Informationen (6, 7), umfassend die Uhrzeit und/oder das Datum, mit einem vorzugsweise flachen, rahmenartigen Gehäuse (8), einem das Gehäuse (8) ab- oder überdeckenden flächigen Informationsträger (3) und mehreren Lichtquelle (9) im Gehäuse (8) hinter dem Informationsträger (3), wobei der Informationsträger (3) vorzugsweise auf der Rückseite eine zumindest teilweise lichtundurchlässige Blende (15) mit Ausnehmungen hat, die der jeweiligen Uhrzeit und/oder dem jeweiligen Datum entsprechen, wobei hinter jeder Ausnehmung oder einer Gruppe von Ausnehmungen jeweils eine Lichtquelle (9) angeordnet ist, so dass bei Aktivierung der Lichtquelle (9) die Uhrzeit und/oder das Datum von der Vorderseite des Informationsträgers (3) her sichtbar bzw. lesbar ist, und wobei im Gehäuse (8) eine Steuerung mit elektronischem Uhrwerk, vorzugsweise umfassend eine Funkuhr, vorgesehen ist, die die Lichtquellen (9) zur Zeitanzeige und/oder Datumsanzeige ansteuert, ist dadurch gekennzeichnet, dass eine Erkennungseinrichtung angeordnet ist, um die Ausrichtung des Gehäuses (8) zu erfassen.

## Beschreibung

Die Erfindung betrifft eine Vorrichtung zur Anzeige von Informationen, umfassend die Uhrzeit und/oder das Datum.

Aus Praxis sind unterschiedlichste Vorrichtungen der hier in Rede stehenden Art bekannt, beispielsweise Armbanduhren, Taschenuhren, Standuhren und Wanduhren herkömmlicher Art, die analog und/oder digital die Uhrzeit und auch das Datum anzeigen.

Nicht selten wird die Anzeige der Uhrzeit und/oder die Anzeige des Datums über Ausgestaltungen in mehr oder weniger kunstvollen Gehäusen dargeboten. Uhren mit und ohne Datumsanzeige werden häufig auch als Werbeträger verwendet.

Uhren der hier in Rede stehenden Art sind in ihrem Erscheinungsbild nur bedingt veränderbar und wirken als Objekt eher langweilig. Bei manchen digitalen Uhren ist von einer 12-stündigen Darstellung auf eine 24-stündige Darstellung umstellbar. Wecker haben oft eine Dimmfunktion für die Beleuchtung und lassen sich in der Anzeige von Uhrzeit auf Weckzeit, Datum und ggf. auch auf Außentemperatur umstellen. Die Flexibilität solcher Vorrichtungen hat ihre engen Grenzen.

Des Weiteren ist aus der DE 10 2018 212 262 A1 eine Vorrichtung zur Anzeige der Uhrzeit bzw. des Datums vorbekannt. Diese weist ein Gehäuse, einen das Gehäuse ab- oder überdeckenden flächigen Informationsträger und mehreren Lichtquellen im Gehäuse hinter dem Informationsträger auf. Der Informationsträger weist eine zumindest teilweise lichtundurchlässige Blende mit Ausnehmungen auf, die der jeweiligen Uhrzeit und/oder dem jeweiligen Datum entsprechen, wobei hinter jeder Ausnehmung jeweils eine Lichtquelle angeordnet ist, so dass bei Aktivierung der Lichtquelle die Uhrzeit und/oder das Datum von der Vorderseite des Informationsträgers her sichtbar ist. Weiterhin ist in dem Gehäuse eine Steuerung mit elektronischem Uhrwerk vorgesehen, die die Lichtquellen zur Zeitanzeige und/oder Datumsanzeige ansteuert.

Der vorliegenden Erfindung liegt die Aufgabe zugrunde, eine Vorrichtung zur Anzeige von Informationen, insbesondere zur Anzeige von Uhrzeit und/oder Datum, flexibel in der Darstellung auszugestalten.

An dieser Stelle sei angemerkt, dass der Begriff "Information" im Rahmen der beanspruchten Lehre im weitesten Sinne zu verstehen ist, und zwar neben der eigentlichen Uhrzeit und/oder dem Datum. So lassen sich mit der erfindungsgemäßen Vorrichtung beliebige sonstige Informationen darstellen und mit der Uhrzeit und dem Datum kombinieren. Neben Uhrzeit und Datum kann auch eine detektierte Außentemperatur oder eine detektierte Innentemperatur angezeigt werden. Sonstige alphanummerische Informationen sind ebenfalls darstellbar. Stellvertretend dafür sei nachfolgend lediglich die Uhrzeit und/oder das Datum abgehandelt.

Die voranstehende Aufgabe ist durch die kennzeichnenden Merkmale des Patentanspruchs 1 gelöst, wonach eine Erkennungseinrichtung angeordnet ist, um die Ausrichtung des Gehäuses zu erfassen.

In erfindungsgemäßer Weise ist erkannt worden, dass die Flexibilität der Vorrichtung erheblich verbessert werden kann, indem die Ausrichtung des Gehäuses erkennbar ist. Im Konkreten ist dabei denkbar, dass durch die Erkennungseinrichtung erfasst werden kann, ob die Vorrichtung im Hochformat oder im Querformat ausgerichtet ist, wobei die Vorrichtung vorzugsweise eine zumindest im Wesentlichen rechteckige Geometrie aufweisen kann, wobei weiter vorzugsweise eine Längsseite länger ausgebildet ist als eine Querseite. Auch kann das Gehäuse ähnlich der Dicke eines Bildes mit Rahmen ausgebildet sein.

Gemäß einer vorteilhaften Ausgestaltung ist es denkbar, dass die Aktivierung bzw. Steuerung der Lichtquelle unter Berücksichtigung der von der Erkennungseinrichtung erfassten Ausrichtung des Gehäuses anpassbar ist. Somit ist auf verblüffend einfache Weise gewährleistet, dass die Anzeige der Information stets korrekt dargestellt wird, unabhängig von der Ausrichtung der Vorrichtung, beispielsweise ob diese im Hochformat oder im Querformat ausgerichtet ist.

In weiter vorteilhafter Weise könnte die Erkennungseinrichtung einen Sensor umfassen. Hierbei könnte es sich beispielsweise um einen Beschleunigungssensor oder einen beliebigen anderen Sensor handeln, der die Ausrichtung der Vorrichtung detektiert, insbesondere, ob die Vorrichtung um Hochformat oder im Querformat ausgerichtet ist. So ist es möglich, die Vorrichtung im Hochformat oder im Querformat aufzustellen oder aufzuhängen, wobei die Ausrichtung automatisch erfassbar ist und die Ansteuerung bzw. Aktivierung der Lichtquelle entsprechend anpassbar ist.

In besonders vorteilhafter Weise könnte ein Träger zur Aufnahme des Gehäuses angeordnet sein. Bei dem Träger kann es sich beispielsweise um einen Ständer handeln, auf den das Gehäuse auflegbar bzw. an dem das Gehäuse fixierbar ist. Vorzugsweise kann das Gehäuse in mindestens zwei Positionen bzw. Ausrichtungen an dem Träger positioniert werden, vorzugsweise im Hochformat und im Querformat. Zusätzlich ist es denkbar, dass die Erkennungseinrichtung ein dem Träger zugeordnetes Erkennungsmittel und einen dem Gehäuse zugeordneten Sensor aufweist. Das Erkennungsmittel könnte beispielsweise durch einen Magneten und der Sensor durch einen Reedschalter realisiert sein. Beliebige andere Konstruktionen sind denkbar, die die Ausrichtung bzw. Positionierung des Gehäuses erkennen. Unabhängig von der konkreten Ausgestaltung kann durch eine solche Anordnung erkannt werden, in welcher Position die Vorrichtung bzw. das Gehäuse auf bzw. an dem Träger angeordnet ist. Durch diese Positionserfassung kann die Lichtquelle entsprechend angesteuert werden. Mit anderen Worten kann die Umstellung der Informationsanzeige von Hoch- auf Querformat und umgekehrt mit Hilfe eines Sensors, insbesondere einem Reedschalter, erfolgen der bspw. auf der Platine der Lichtquelle, angeordnet ist. Auf gleicher Höhe zum Sensor kann auf dem Ständer, in welchen die Vorrichtung im Querformat gestellt wird, ein Erkennungsmittel, insbesondere ein Magnet angeordnet. Sobald das Erkennungsmittel detektiert wird, erfolgt die Darstellung der Information im Querformat, die rückseitig auf dem Wechselrahmen gedruckt ist. Wird das Gehäuse in vertikaler Ausrichtung auf den Ständer positioniert, so rastet das Erkennungsmittel des Ständers an anderer vorgegebener Position auf dem Gehäuse ein, wodurch automatisch die Information im Hochformat angezeigt wird, da das Erkennungsmittel nicht mehr über dem Sensor steht, der die querformatige Einstellung auslöst.

Neben dem rahmenartigen Gehäuse ist ein das Gehäuse ab- oder überdeckender flächiger Informationsträger vorgesehen. In dem Gehäuse sind mehrere Lichtquellen angeordnet, und zwar hinter dem Informationsträger, so dass die Lichtquellen den Informationsträger, bei entsprechender teiltransparenter Ausgestaltung, zur Vorderseite hin durchleuchten können.

Der Informationsträger hat vorzugsweise auf der Rückseite eine zumindest teilweise lichtundurchlässige und so auch entsprechend teilweise lichtdurchlässige Blende mit Ausnehmungen, die der jeweiligen Uhrzeit und/oder dem jeweiligen Datum und/oder weiteren Informationen, beispielsweise der Temperatur, entsprechen. Hinter jeder Ausnehmung oder hinter einer Gruppe von Ausnehmungen ist jeweils eine Lichtquelle angeordnet, so dass bei Aktivierung der Lichtquelle die diesbezügliche Uhrzeit und/oder das Datum von der Vorderseite des Informationsträgers her, aufgrund der Durchleuchtung, sichtbar bzw. lesbar ist.

Im Gehäuse ist eine vorzugsweise programmierbare Steuerung vorgesehen, die ein elektronisches Uhrwerk umfasst, welches mit einer Funkuhr ausgestattet sein kann. Die Lichtquellen bzw. die jeweilige Lichtquelle wird zur konkreten Zeitanzeige und/oder Datumsanzeige angesteuert, so dass in Bezug auf das Datum der konkrete Tag, der konkrete Monat und ggf. das konkrete Jahr aufgrund einer Durchleuchtung der Blende von der Vorderseite her sichtbar ist.

Die Uhrzeit kann mit minütlicher Änderung alphanummerisch mit 12-stündiger Anzeige oder 24-stündiger Anzeige dargestellt werden. Auch ist denkbar, den Verlauf der Sekunden durch Zahlen oder durch eine Grafik darzustellen, nämlich ebenfalls durch entsprechende Durchleuchtung einer entsprechenden Blende.

In vorteilhafter Weise setzt sich die Uhrzeit und/oder das Datum aus mehreren einzelnen Ausnehmungen der Blende zusammen, die von einer einzigen oder von unterschiedlichen Lichtquellen durchleuchtet werden. Die Kombination mehrerer Lichtquellen zur Durchleuchtung einer einzigen Datums-/Zeitinformation ist bei entsprechend großer Darstellung möglich und auch von Vorteil.

Die Uhrzeit und/oder das Datum wird in vorgegebenen, voneinander getrennten Bereichen des Informationsträgers dargestellt. So kann die Uhrzeit beispielsweise in einem Bereich links oben und das Datum in einem Bereich von der Mitte bis rechts unten dargestellt werden. Im Rahmen einer solchen konkreten Anordnung gewöhnt sich der Beobachter an die jeweilige Stelle auf dem Informationsträger für die konkrete Information.

Die bereits zuvor angesprochene Blende kann als Beschichtung auf der Rückseite des Informationsträgers oder durch Bedrucken der Rückseite des Informationsträgers erzeugt werden. Die Nutzung einer ausgestanzten Folie ist denkbar. Wesentlich ist dabei, dass die Ausnehmungen der von der Vorderseite her erkennbaren Information entsprechen.

Auch ist es denkbar, dass die Blende als flächiges, separates Bauteil ausgeführt ist, welches unmittelbar hinter dem Informationsträger an diesem anliegt oder mit diesem, beispielsweise klebetechnisch, verbunden ist. Bei separater Ausführung der beiden Bauteile - Informationsträger und Blende - ist ein Austausch möglich.

Die Lichtquellen umfassen in vorteilhafter Weise einzelne LEDs oder einzelne elektrolumineszierende Flächen. Sie können rasterartig angeordnet sein, wobei sich deren Anordnung über einen Teilbereich oder die gesamte Fläche des Gehäuses bzw. des Informationsträgers hinweg, zur Vorderseite hin gerichtet, erstreckt. Insbesondere bei Nutzung zahlreicher LEDs ist es von Vorteil, wenn diese auf einer oder mehreren Platinen angeordnet und entsprechend geschaltet und gesteuert sind. Die gesamte Anordnung der Lichtquellen ist dem Gehäuse bzw. dem Inneren des Gehäuses zugeordnet. Der Lichtaustritt ist nach außen bzw. vorne gerichtet.

In weiter vorteilhafter Weise ist der Lichtaustritt der Lichtquellen aus dem Gehäuse durch eine Lichtmaske mit vorzugsweise runden Lichtfenstern definiert, wobei die Form, entsprechend dem konkreten Bedarf, beliebig gestaltet sein kann, zum Beispiel auch viereckig, mehreckig, oval, etc. Die Lichtmaske ist der Einfachheit halber insgesamt über die Lichtfenster gelegt, beispielsweise in Form einer auf die Lichtmaske aufgeklebten Streufolie zur Erzeugung diffusen Lichts/Streulichts. Auch ist es denkbar, dass die Lichtmaske lediglich im Bereich der Lichtfenster mit jeweils konkret zugeschnittenen Einzelfolien überdeckt wird.

In weiter vorteilhafter Weise umfassen die Lichtquellen RGB-LEDs. Entsprechend umfasst die Steuerung eine RGB-Farbsteuerung, so dass im Zeitverlauf eine Farbänderung oder ein Umschalten der Beleuchtung auf unterschiedliche Farben möglich ist. Vorteile einer RGB-Farbsteuerung lassen sich vollumfänglich nutzen.

Auf der Rückseite des Informationsträgers, vorzugsweise zwischen der blendenartigen Beschichtung und dem Informationsträger, oder aber auf der Vorderseite des Informationsträgers, kann eine vorzugsweise teilweise lichtdurchlässige weitere Bildinformation vorgesehen sein. Dabei kann es sich um eine oder mehrere Farben, ein Bild, Werbung beliebiger Art, etc. handeln. Wie bereits eingangs ausgeführt, ist der Begriff der Information, hier im Konkreten eine Bildinformation, im weitesten Sinne zu verstehen. Die Bildinformation kann z.B. hervorgehoben werden durch einen Aufdruck eines beliebigen Motivs in schwarz/weiß oder farbig, durch einen Aufdruck mit Edelmetall, vorzugsweise Gold, Silber, Kupfer und/oder Platin, durch eine farbige Anzeige der Informationen, insbesondere durch RGB-Licht oder eine Farbleuchtfolie, und/oder durch eine zumindest im Wesentlichen vollständige Hinterleuchtung der Blende (backlite), durch die das Licht mit angezeigter Information fällt.

Die Bildinformation kann auf den Informationsträger beispielsweise mittels Tintenstrahldrucker aufgedruckt sein. Letztendlich kann es sich bei der Bildinformation um ein hinterleuchtetes Bild oder Diapositiver handeln. Der Informationsträger selbst kann aus einem durchsichtigen Material hergestellt sein, beispielsweise aus Glas, insbesondere aus bruchsicherem Glas, oder aus Acrylglas. Das Material kann beispielsweise mit einer Spiegelfolie versehen sein, wobei diese zumindest geringfügig lichtdurchlässig ausgebildet sein sollte, so dass die Informationen mittels der Lichtquelle angezeigt werden können. Alternativ ist es denkbar, dass der Informationsträger aus einem entsprechend lichtdurchlässigem Spiegel hergestellt ist. Der Optik wegen sollte der Rand geschliffen, poliert, gefast oder sonst wie bearbeitet sein. Der Optik wegen ist es weiter vorteilhaft, wenn das Acrylglas auf dem Gehäuse der Vorrichtung bündig sitzt oder dieses zumindest geringfügig überlappt. Dadurch wird ein eleganter rahmenloser Eindruck vermittelt.

In weiter vorteilhafter Weise ist der Informationsträger vom Gehäuse abnehmbar, nämlich gegen einen anderen Informationsträger, mit anderer Bildinformation, austauschbar. So lassen sich mit der gleichen Vorrichtung wechselweise unterschiedliche Motive darstellen, beispielsweise unterschiedliche Bilder, die allesamt mit der gleichen Zeit- und Datuminformation, durch die jeweilige Blende hindurch, ausgestattet sind. Die Lichtquellen, insbesondere die Anordnung der Lichtquellen im Gehäuse, bleibt unverändert. So lässt sich die gleiche Vorrichtung mit beliebig vielen Informationsträgern wechselweise ausstatten, so dass der Betreiber der Vorrichtung maximale Flexibilität in der Darstellung hat. So lassen sich beispielsweise auch im Nachhinein weitere Informationsträger herstellen, beispielsweise mit aufgedruckten Urlaubsbildern, Werbebotschaften oder sonstigen Motiven/Farben.

Die Entfernbarkeit und somit die Austauschbarkeit des Informationsträgers kann auf unterschiedliche Art und Weise bewerkstellig werden, beispielsweise mittels einer sogenannten Nadelfilzverbindung (auch Klettverschluss genannt). In ganz besonders vorteilhafter Weise ist der Informationsträger durch mehrere einzelne Magnete oder durch Magnetflächen bzw. Magnetstreifen positionsgenau am Gehäuse anbringbar, um eine exakte Hinterleuchtung bzw. Durchleuchtung der jeweiligen Blende zu bewerkstelligen. Der Magnet, der zur eigentlichen Fixierung dient, dient gleichzeitig zur Zwangspositionierung bei entsprechendem Eingriff. Steckverbindungen, Rastverbindungen oder sonstige reversible Verbindungen sind anwendbar. In weiter vorteilhafter Weise kann an dem Gehäuse mindestens ein Bereich mit einem ausreichend starken Magneten versehen sein, so dass dieser durch den Informationsträger hindurch wirkt, um beliebige magnetische oder magnetisierbare Objekte an dem Informationsträger festlegen zu können. Somit ist durch diese Konstruktion eine magnetische Pinnwand geschaffen.

Vorzugsweise auf einer Seite des Gehäuses, möglichst im Rahmen des Gehäuses bzw. in die Seite des Gehäuses, kann eine Bedieneinrichtung vorzugesehen sein, die zum manuellen Ein-/Ausschalten und/oder zur Einstellung von Grundfunktionen wie Winterzeit/Sommerzeit, Helligkeit und/oder Farbe der Lichtquellen, Darstellung in Längs- oder Querformat, etc. dient.

Ebenso ist es von Vorteil, wenn eine insbesondere per Funkt, WLAN oder Bluetooth mit der vorzugsweise programmierbaren Steuerung kommunizierende Fernbedienung vorgesehen ist, mit der sich die Vorrichtung insgesamt auf komfortable Weise bedienen lässt. Anstelle einer separaten Fernbedienung kann eine auf ein Mobiltelefon einen Organizer, etc. ladbare App vorgesehen sein, über die vorzugsweise per WLAN oder Bluetooth die Vorrichtung steuerbar ist. Auch lässt sich die Vorrichtung in bereits existierende Programme zur Steuerung der häuslichen Infrastruktur einbinden.

Gemäß einer weiteren vorteilhaften Ausgestaltung kann die Vorrichtung einen Lautsprecher und ein Speichermedium für eine akustische Datei oder eine Schnittstelle zu einem entsprechenden externen Gerät aufweisen. Dadurch ist es möglich, einen akustischen Hinweis auszugeben. Beispielsweise könnte eine Tonausgabe oder eine Melodie, insbesondere zur vollen Stunde oder bereits vorher erfolgen, wenn die Steuerung der Uhrzeit mit dem Tonträger gekoppelt ist bzw. eines Chirps, wie er auch für MP3 Player Anwendung findet. Sofern eine Steuerung der Vorrichtung über WLAN oder Bluetooth anhand eines Endgeräts, beispielsweise eines Mobiletelefons, Tablets oder Computers etc. möglich ist, kann eine akustische Datei über das Endgerät an die Vorrichtung übermittelt werden oder die Vorrichtung beispielsweise als Online-Radio genutzt werden.

Das Gehäuse, insbesondere etwaige Rahmenteile des Gehäuses, können aus Kunststoff, Hartschaum, Aluminium oder Holz hergestellt sein. Zur einfachen Handhabung lässt sich die Vorrichtung in Leichtbauweise realisieren, insbesondere unter Nutzung von Hartschaum oder dünnwandigen Aluminiumprofilen.

Auf der Rückseite des Gehäuses ist dieses mit einer Gehäuseplatte abgeschlossen, wobei paarweise Ausnehmungen oder Ösen vorgesehen sein können, die zum wahlweisen Aufhängen de Vorrichtung dienen. Diese können derart ausgestaltet und angeordnet sein, dass ein Aufhängen der Vorrichtung, wahlweise um jeweils 90° gedreht, möglich ist, ohne konstruktive Änderungen vornehmen zu müssen. So ist eine optimale Anpassung an Informationsträger mit horizontal oder vertikal ausgerichteten Bildelementen möglich.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung eines bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Vorderansicht ein Ausführungsbeispiel einer erfindungsgemäßen Vorrichtung mit Anzeige von Datum und Uhrzeit, wobei das Datum und die Uhrzeit von der Rückseite des Informationsträgers durch eine Blende und ein Bild hindurch geleuchtet wird,
- Fig. 2: in einer schematischen Ansicht die Vorrichtung aus Figur 1 bei entnommenem Informationsträger, wodurch die Lichtmaske mit den matrixartig angeordneten Lichtfenstern erkennbar ist, die von der Rückseite her einzeln oder kombiniert durchleuchtet werden,
- Fig. 3: den entnommenen Informationsträger von der Rückseite her mit den Magneten zur Fixierung am Gehäuse und der zur Durchleuchtung dienenden Blende mit der Zeit- und/oder Datumsinformation,
- Fig. 4: in einer schematischen Seitenansicht ein in das Gehäuse bzw. den Rand des Gehäuses eingelassenes Bedienteil mit Starkstrom- oder Schwachstromanschluss, und
- Fig. 5: in einer schematischen Vorderansicht ein Ausführungsbeispiel eines Trägers für ein Gehäuse einer erfindungsgemäßen Vorrichtung.

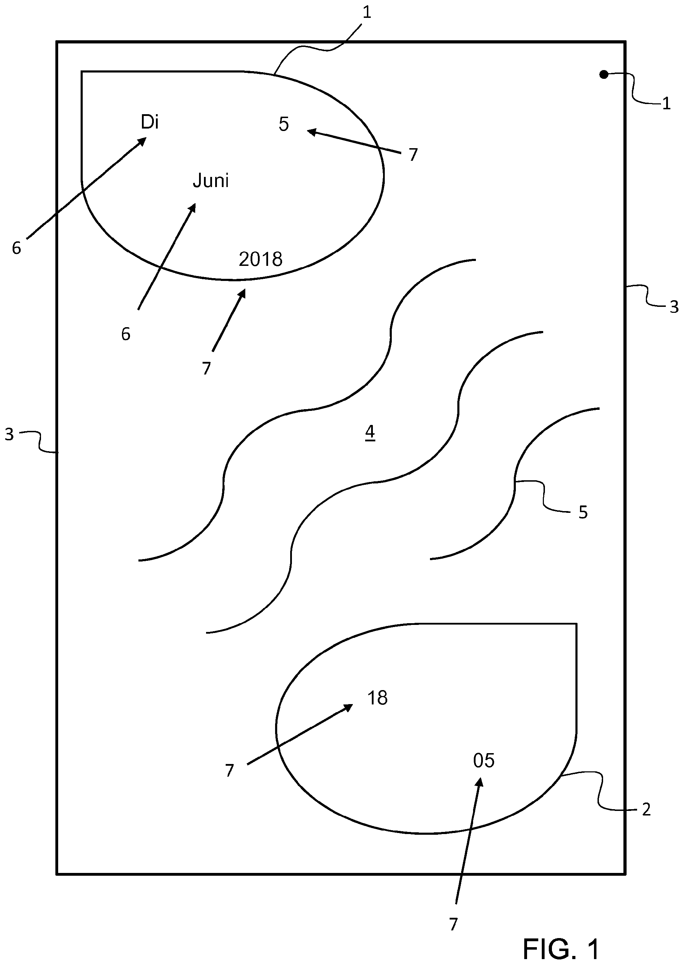

Figur 1 zeigt die erfindungsgemäße Vorrichtung in einer schematischen Vorderansicht (Draufsicht), wobei diese Vorrichtung zur besonderen Darstellung von Uhrzeit und/oder Datum dient. Bei dem hier gewählten Ausführungsbeispiel wird das Datum in einem Bereich 1 oben links und wird die Uhrzeit in einem Bereich 2 unten rechts gezeigt, wobei dazu von der Rückseite des Informationsträgers 3 her eine in Figur 1 nicht gezeigten Blende, mit der jeweiligen Datums-/Zeitinformation, zur Vorderseite hin durchleuchtet wird. Eine vom Informationsträger 3 weiter getragene Bildinformation 4 wird an entsprechender Stelle, durch die rückseitige Maske hindurch, durchleuchtet. Dies bedeutet, dass die Bildinformation 4, im Konkreten ein auf der Rückseite des Informationsträgers 3 unmittelbar auf diesen aufgedrucktes Bild 5, zumindest teilweise lichtdurchlässig sein muss, um nämlich durch Durchleuchten der rückseitigen Blende die Information in Form leuchtender Buchstaben 6 und Zahlen 7 von der Vorderseite her erkennen zu können.

Bei dem in Figur 1 gezeigten Ausführungsbeispiel ist oben links, d.h. im Bereich 1, das Datum - Dienstag, der 5. Juni 2018 - angezeigt. Im Bereich 2, unten rechts, ist die Uhrzeit - 18:05 Uhr - angezeigt. Bei sich ändernden Daten und Uhrzeiten verändert sich die konkrete Position der jeweiligen Anzeige, nämlich aufgrund der jeweils angesteuerten Lichtquelle.

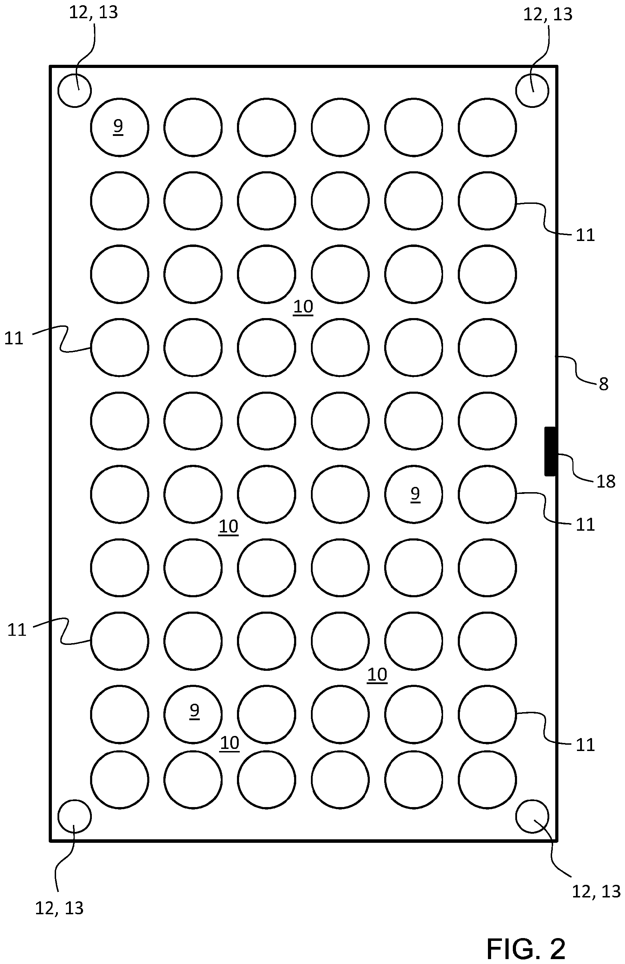

Figur 2 zeigt die erfindungsgemäße Vorrichtung ohne den Informationsträger 3, wie er in Figur 1 schematisch dargestellt ist. Es ist das Gehäuse 8 erkennbar, in dem sich die einzelnen LED-Lichtquellen 9 befinden. Diese können über die integrierte Steuereinrichtung einzeln angesteuert werden, werden im Konkreten von der Steuereinrichtung entsprechend der Uhrzeit und dem Datum und entsprechend der Ausgestaltung der hier nicht gezeigten Blende getaktet.

In dem Gehäuse 3 befinden sich die einzelnen Lichtquellen 9 und die darüber angeordnete Lichtmaske 10 mit matrixartig angeordneten bzw. ausgebildeten Lichtfenstern 11. Die Lichtfenster 11 sind auf die rückseitig vom Informationsträger 3 getragene Blende angepasst bzw. darauf abgestimmt.

In Figur 2 sind des Weiteren Befestigungsmittel 12 angedeutet, die als Magnete 13 oder ferromagnetisches Material ausgeführt sein können. Die Magnete 13 bzw. das entsprechend ferromagnetische Material sitzt in vorteilhafter Weise in Vertiefungen im Gehäuse 8, die mit erhabenen Magneten 14 auf der Rückseite des Informationsträgers 3 korrespondieren. Durch Einstecken der Magnete 13 in die Ausnehmungen bzw. Vertiefungen des Gehäuses 8 wird eine passgenaue Positionierung erreicht.

Des Weiteren ist in Figur 2 gezeigt, dass an dem Gehäuse 8 ein Sensor 18 angeordnet ist, der ein Teil einer Erkennungseinrichtung darstellt. Der Sensor 18 kann beispielsweise als Reedschalter ausgebildet sein, der durch einen Magneten geschaltet werden kann. Auch ist es denkbar, dass es sich um einen Beschleunigungssensor handelt. Wesentlich ist, dass der Sensor 18 dazu ausgebildet ist, die Ausrichtung des Gehäuses 8, insbesondere ob diese im Querformat oder Hochkant ausgerichtet ist, erkennt, so dass auf dieser Grundlage die Steuerung der LED-Lichtquellen 9 erfolgen kann.

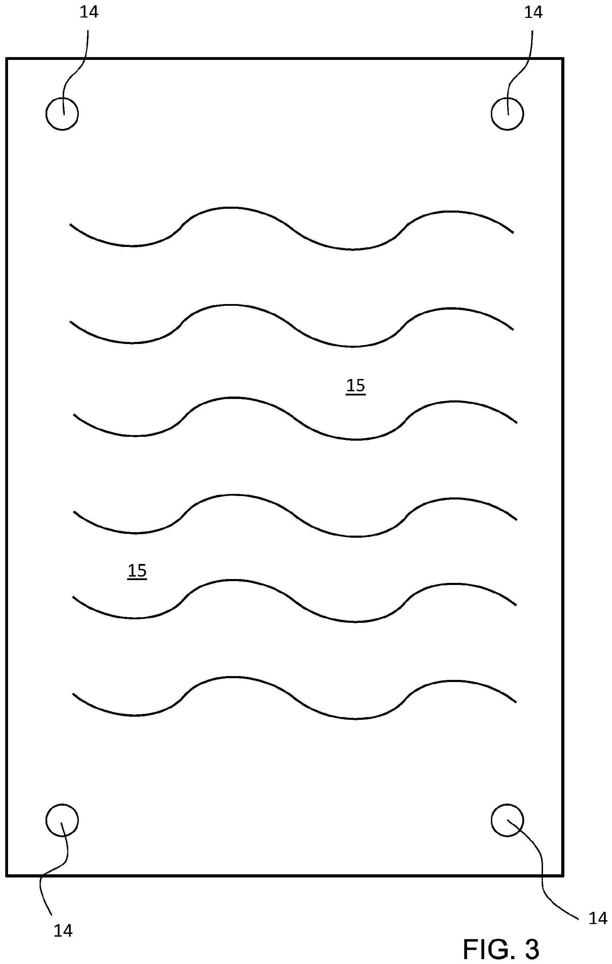

Figur 3 zeigt den Informationsträger 3 von der Rückseite her, zeigt dort die auf der Rückseite aufgesetzten Magnete 14 und die die Zeit-/Datumsinformationen durch Aussparungen, Ausstanzungen oder gleichen enthaltende Blende 15. Die konkreten Zeit-/Datumsinformationen korrespondieren mit den Lichtfenstern 11 der Lichtmaske 10 des Gehäuses 8 aus Figur 2. Über die Steuerung wird die Beleuchtung des entsprechenden Lichtfensters 11 aktiviert.

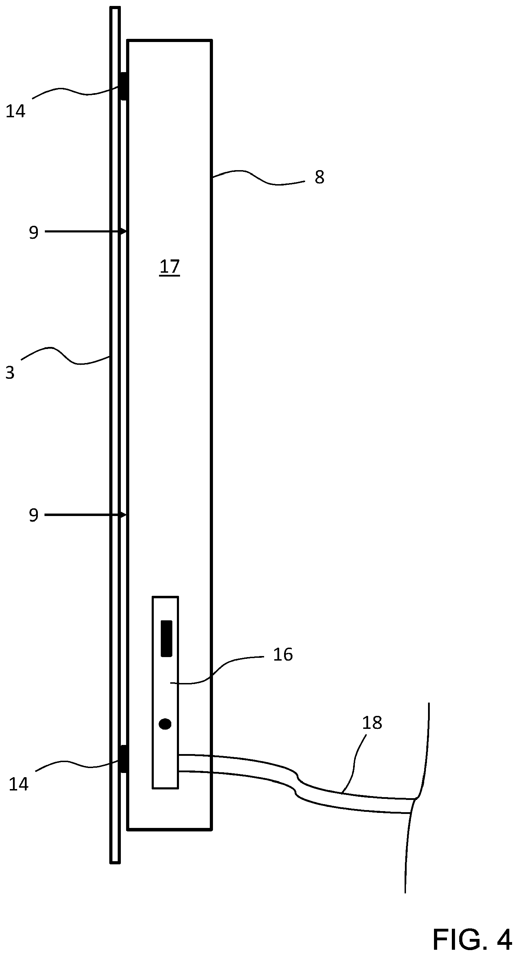

Figur 4 zeigt die erfindungsgemäße Vorrichtung von der Seite her, nämlich ein Bedienteil 16, welches seitlich in das Gehäuse 8 oder in den Rahmen 17 des Gehäuses 8 eingesetzt ist. Hier können grundsätzliche Funktionen wie das Ein-/Ausschalten, der Wechsel von Sommerzeit zu Winterzeit und/oder der Wechsel von Querformat auf Längsformat verankert sein, wobei zur detaillierten Bedienung, insbesondere zur Programmierung, eine nicht gezeigte Fernbedienung oder die Bedienung per mobilem Endgerät der Datenkommunikation möglich und dabei komfortabel ist.

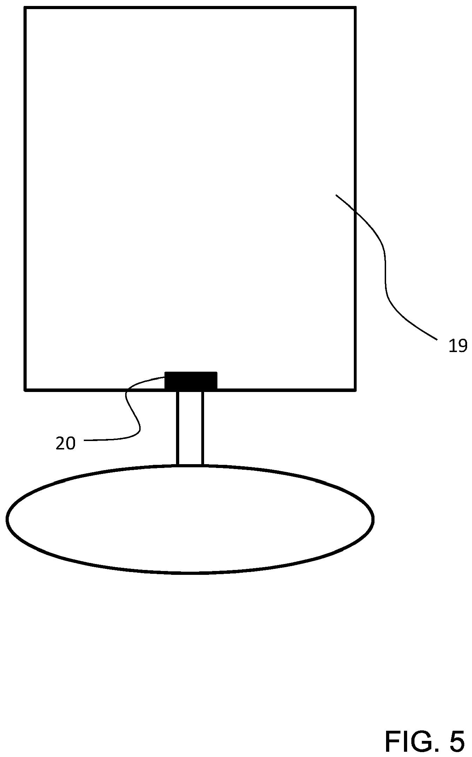

Figur 5 zeigt einen Träger 19 auf bzw. an dem das Gehäuse 8 nebst Informationsträger 3 beispielsweise im Hochformat und im Querformat positioniert werden kann. Der Träger 19 weist ein Erkennungsmittel 20 auf. Hierbei kann es sich beispielsweise um einen Magneten handeln, der einen als Reedschalter ausgebildeten Sensor 18 schaltet, wenn das Gehäuse 8 derart an den Träger 19 positioniert wird, dass Sensor 18 und Erkennungsmittel 20 einen ausreichend geringen Abstand zueinander aufweisen. Bei dem in Figur 2 dargestellten Gehäuse ist dies der Fall, wenn dieses im Querformat an dem Träger 19 angeordnet wird. Dadurch kann die Ausrichtung des Gehäuses 8 erkannt werden und die Steuerung der LED-Lichtquellen 8 entsprechend angepasst werden, so dass die korrekte Uhrzeit bzw. das korrekte Datum angezeigt werden. Wird nun ein Informationsträger 3 an dem Gehäuse 8 angebracht, der eine Darstellung im Hochformat aufweist, wird das Gehäuse 8 - nebst Informationsträger 3 - im Hochformat an dem Träger 19 positioniert und dies durch den Sensor 18 erfasst, beispielsweise indem der Reedschalter nun nicht mehr durch den als Erkennungsmittel 20 dienenden Magneten geschaltet wird.

Die Stromversorgung erfolgt entweder über ein nicht gezeigtes Netzteil oder über eine Starkstromleitung 18, wobei ein Netzteil Gehäuse 8 integriert sein kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiele der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Bereich (oben links)
- 2: Bereich (unten rechts)
- 3: Informationsträger
- 4: Bildformation
- 5: aufgedrucktes Bild
- 6: Buchstaben
- 7: Zahlen
- 8: Gehäuse
- 9: LED-Lichtquellen
- 10: Lichtmaske
- 11: Lichtfenster
- 12: Befestigungsmittel
- 13: Magnete
- 14: Magnete
- 15: Blende
- 16: Bedienteil
- 17: Rahmen
- 18: Sensor
- 19: Träger
- 20: Erkennungsmittel

## Patentansprüche

1. Vorrichtung zur Anzeige von Informationen (6, 7), umfassend die Uhrzeit und/oder das Datum, mit einem vorzugsweise flachen, rahmenartigen Gehäuse (8), einem das Gehäuse (8) ab- oder überdeckenden flächigen Informationsträger (3) und mehreren Lichtquelle (9) im Gehäuse (8) hinter dem Informationsträger (3), wobei der Informationsträger (3) vorzugsweise auf der Rückseite eine zumindest teilweise lichtundurchlässige Blende (15) mit Ausnehmungen hat, die der jeweiligen Uhrzeit und/oder dem jeweiligen Datum entsprechen, wobei hinter jeder Ausnehmung oder einer Gruppe von Ausnehmungen jeweils eine Lichtquelle (9) angeordnet ist, so dass bei Aktivierung der Lichtquelle (9) die Uhrzeit und/oder das Datum von der Vorderseite des Informationsträgers (3) her sichtbar bzw. lesbar ist, und wobei im Gehäuse (8) eine Steuerung mit elektronischem Uhrwerk, vorzugsweise umfassend eine Funkuhr, vorgesehen ist, die die Lichtquellen (9) zur Zeitanzeige und/oder Datumsanzeige ansteuert,
**dadurch gekennzeichnet, dass** eine Erkennungseinrichtung angeordnet ist, um die Ausrichtung des Gehäuses (8) zu erfassen.

2. Vorrichtung nach Anspruch 1, **dadurch gekennzeichnet, dass** die Aktivierung der Lichtquelle (3) unter Berücksichtigung der von der Erkennungseinrichtung erfassten Ausrichtung des Gehäuses (8) anpassbar ist.

3. Vorrichtung nach Anspruch 1 oder 2, **dadurch gekennzeichnet, dass** die Erkennungseinrichtung einen Sensor (18), beispielsweise einen Beschleunigungssensor, umfasst.

4. Vorrichtung nach einem der Ansprüche 1 bis 3, **dadurch gekennzeichnet, dass** ein Träger (19) zur Aufnahme des Gehäuses (8) angeordnet ist.

5. Vorrichtung nach Anspruch 4, **dadurch gekennzeichnet, dass** die Erkennungseinrichtung ein dem Träger (19) zugeordnetes Erkennungsmittel (20), beispielsweise einen Magneten, und eine dem Gehäuse (8) zugeordneten Sensor (18) zur Detektion des Erkennungsmittels (20) aufweist.

6. Vorrichtung nach einem der Ansprüche 1 bis 5, **dadurch gekennzeichnet, dass** sich die Uhrzeit und/oder das Datum aus mehreren einzelnen Ausnehmungen zusammensetzt/zusammensetzen, die von unterschiedliche Lichtquellen (9), einzeln, durchleuchtet werden.

7. Vorrichtung nach einem der Ansprüche 1 bis 6, **dadurch gekennzeichnet, dass** die Uhrzeit und/oder das Datum in vorgegebenen, voneinander getrennten Bereichen des Informationsträgers (3) dargestellt wird/werden.

8. Vorrichtung nach einem der Ansprüche 1 bis 7, **dadurch gekennzeichnet, dass** die Blende (15) durch eine Beschichtung auf der Rückseite des Informationsträgers (3) oder durch Bedrucken der Rückseite des Informationsträgers (3) erzeugt ist.

9. Vorrichtung nach einem der Ansprüche 1 bis 8, **dadurch gekennzeichnet, dass** die Blende als (15) flächiges separates Bauteil ausgeführt ist, welches unmittelbar hinter dem Informationsträger (3) an diesem anliegt.

10. Vorrichtung nach einem der Ansprüche 1 bis 9, **dadurch gekennzeichnet, dass** die Lichtquellen (9) RGB-LEDs umfassen und die Steuerung mit einer RGB-Farbsteuerung ausgestattet ist.

11. Vorrichtung nach einem der Ansprüche 1 bis 10, **dadurch gekennzeichnet, dass** auf der Rückseite des Informationsträgers (3) vorzugsweise zwischen der blendenartigen Beschichtung und dem Informationsträger (3) oder auf der Vorderseite des Informationsträgers (3) eine vorzugsweise teilweise lichtdurchlässige Bildinformation (4) vorgesehen ist, beispielsweise eine oder mehrere Farben, ein Bild, Werbung, etc.

12. Vorrichtung nach Anspruch 11, **dadurch gekennzeichnet, dass** die Bildinformation (4) auf den Informationsträger (3) aufgedruckt ist, und/oder dass die Bildinformation als hinterleuchtetes Bild ausgeführt ist.

13. Vorrichtung nach einem der Ansprüche 1 bis 12, **dadurch gekennzeichnet, dass** der Informationsträger (3) aus einem durchsichtigen Material hergestellt ist, insbesondere aus vorzugsweise bruchsicherem Glas oder Acrylglas und ggf. mit einer Spiegelfolie versehen ist, oder dass der Informationsträger (3) aus einem zumindest teilweise transparentem Spiegel hergestellt ist.

14. Vorrichtung nach einem der Ansprüche 1 bis 13, **dadurch gekennzeichnet, dass** der Informationsträger (3) vom Gehäuse (8) abnehmbar ist.

15. Vorrichtung nach einem der Ansprüche 1 bis 14, **dadurch gekennzeichnet, dass** eine auf ein Mobiltelefon, einen Organizer, etc. ladbare App vorgesehen ist, über die vorzugsweise per WLAN oder Bluetooth die Vorrichtung steuerbar ist.
